# EUROPÄISCHE PATENTANMELDUNG

(11) **EP 1 690 719 A2**
(43) Veröffentlichungstag der Anmeldung: **16.08.2006**
(21) Anmeldenummer: 05021476.6
(22) Anmeldetag: 30.09.2005
(51) Int. Cl.: B60J 10/00, B60J 10/02

(54) **Dichtungsprofil für eine Fahrzeugscheibe und Fahrzeugscheibenanordnung mit einer Fahrzeugscheibe und einem derartigen Dichtungsprofil**

(30) Priorität: 12.02.2005 DE 102005006436
(71) Anmelder: Dr.Ing. h.c.F. Porsche Aktiengesellschaft, 70435 Stuttgart (DE)
(72) Erfinder: Eckart, Gerald, 88299 Leutkirch (DE)

(57) **Zusammenfassung**

Die Erfindung betrifft ein Dichtungsprofil (14) für eine Fahrzeugscheibe (12) bzw. eine Fahrzeugscheibenanordnung (6) mit einer Fahrzeugscheibe (12) und einem Grundkörper (16) und mit einer von dem Grundkörper ausgehenden freistehenden Dichtungslippe (20) mit einer - im Querschnitt gesehen - Dicke (D), wobei die Dichtungslippe an ihrem Ende (21) einen verdickten Dichtungsabschnitt (22) trägt, der - im Querschnitt gesehen - zumindest abschnittweise, d.h. mit Ausnahme von seinem Verbindungsbereich (24) mit der Dichtungslippe (20) im wesentlichen kreisförmig ist, und der einen Durchmesser (A) aufweist, der größer als die Dicke der Dichtungslippe ist.

Für ein verbessertes Dichtungsverhalten ist vorgesehen, dass der Dichtungsabschnitt (22) im Querschnitt als Vollprofil ausgeführt ist.

## Beschreibung

Bei der Erfindung wird ausgegangen von einem Dichtungsprofil für eine Fahrzeugscheibe, gemäß Oberbegriff des Anspruchs 1, und einer Fahrzeugscheibenanordnung mit einer Fahrzeugscheibe und einem derartigen Dichtungsprofil, gemäß Anspruch 4.

Ein gattungsbildendes Dichtungsprofil für eine Fahrzeugscheibe ist aus der WO 99/12760 A1 bekannt. Das Dichtungsprofil weist einen Grundkörper auf, von dem eine freistehende Dichtungslippe ausgeht, die an ihrem freien Ende einen verdickten Dichtungsabschnitt in Form eines Schlauches trägt. Der Dichtungsabschnitt ist somit - im Querschnitt gesehen - im wesentlichen kreisförmig ausgeführt, mit Ausnahme seines Verbindungsbereiches mit der Dichtlippe. Der Durchmesser des gegenüber der Dichtungslippe verdickt ausgeführten kreisförmigen Dichtungsabschnitts ist - im Querschnitt gesehen - größer als die Dicke der Dichtungslippe.

Aufgabe der Erfindung ist es, ein Dichtungsprofil für eine Fahrzeugscheibe anzugeben, das hinsichtlich seiner Dichtwirkung optimiert ist.

Gelöst wird diese Aufgabe mit einem Dichtungsprofil, welches die in Anspruch 1 genannten Merkmale umfasst. Diese Aufgabe wird auch gelöst mit einer Fahrzeugscheibenanordnung nach Anspruch 4. Weiterbildungen der Erfindung sind in den zugehörigen Unteransprüchen angegeben.

Die mit der Erfindung hauptsächlich erzielten Vorteile sind darin zu sehen, dass der im Querschnitt als Vollprofil mit Kreisquerschnitt ausgeführte Dichtungsabschnitt bei seiner Anlage an einer zugeordneten Dichtfläche im wesentlichen nicht verformt wird, so dass eine linienförmige Anlage mit dieser Dichtfläche unabhängig von der Lage der Dichtungslippe erreicht wird. Damit wird eine große Dichtkraft auf eine kleine Fläche aufgebracht, welche das Dichtungsverhalten verbessert. Außerdem ist die Anlage des Dichtungsabschnitts an der Dichtfläche weniger toleranzempfindlich, da unabhängig von der Lage der Dichtungslippe der kreisförmige Dichtungsabschnitt immer die linienförmige Anlage mit der Dichtfläche aufweist. Außerdem ist somit die Anlagekraft des Dichtungsabschnitts an der Dichtfläche definiert einstellbar. Durch die linienförmige Anlage des Dichtungsabschnitts an der Dichtfläche wird ferner die Gefahr der Geräuschentwicklung, insbesondere bei dem so genannten Stick-Slip (Halten und Rutschen) reduziert.

Nach einer Weiterbildung mit den in Anspruch 2 genannten Merkmalen lässt sich das Dichtungsprofil auf einfache Art und Weise herstellen, beispielsweise durch Extrudieren.

Gemäß Anspruch 5 wird eine besonders bevorzugte Verwendung der Scheibenanordnung angegeben. Denkbar wäre es jedoch alternativ, dass die Dichtungslippe an der Fahrzeugscheibe und der Grundkörper an dem Rohbauausschnitt angeordnet ist.

Bei einem in Anspruch 6 angegebenen Ausführungsbeispiel kann die Fahrzeugscheibe mit dem daran angespritzten Dichtungsprofil einfach in den Rohbauausschnitt des Kraftfahrzeugs eingesetzt werden.

Besonders bevorzugt wird das erfindungsgemäße Dichtungsprofil bei einer Fahrzeugscheibenanordnung verwendet, die bezüglich des Rohbauausschnitts einstellbar ist, wie dies in Anspruch 8 angegeben ist. Dabei ist durch das erfindungsgemäße Dichtungsprofil gewährleistet, dass der kreisförmige Dichtungsabschnitt unabhängig von der Lage der Fahrzeugscheibe bezüglich des Rohbauausschnitts die linienförmige Anlage über den gesamten Einstellbereich ermöglicht.

Die Erfindung wird nachfolgend anhand eines Ausführungsbeispiels mit Bezug auf die Zeichnungen näher erläutert.

Es zeigen
- Fig. 1: in einer Perspektive ein Kraftfahrzeug mit einer Fahrzeugscheibenanordnung und

- Fig. 2: einen Schnitt durch die Fahrzeugscheibenanordnung nach Linie II-II in Fig. 1.

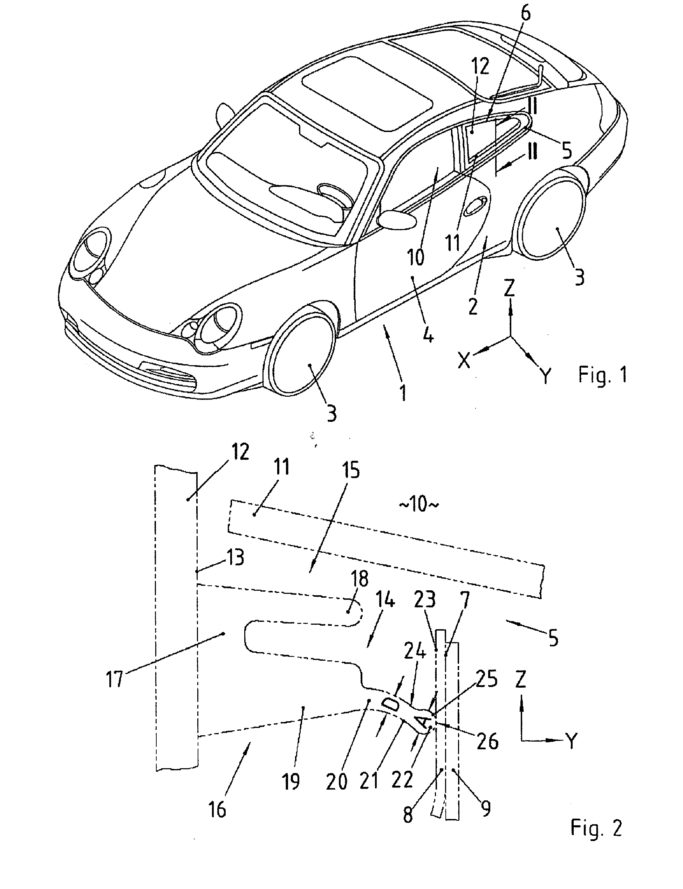

In Fig. 1 ist ein Kraftfahrzeug 1 mit einem Aufbau 2 gezeigt, der von Rädern 3 getragen wird. Der Aufbau 2 umfasst eine Karosserie 4 mit einem Karosserieausschnitt 5, in die eine Fahrzeugscheibenanordnung 6 eingesetzt ist. Der Karosserieausschnitt 5 wird gemäß Fig. 2 begrenzt von einem zumindest teilweise umlaufenden Rohbauflansch 7, der ein Außenblech 8 und ein Innenblech 9 umfasst, die miteinander verbunden sind. Im Innern eines Fahrgastraumes 10 ist benachbart zum Karosserieausschnitt 5 ein Innenverkleidungsteil 11 angeordnet.

Die Fahrzeugscheibenanordnung 6 besitzt eine Fahrzeugscheibe 12 und ein an einer Innenseite 13 der Fahrzeugscheibe 12 angeordnetes Dichtungsprofil 14, welches sich zwischen der Fahrzeugscheibe 12 und dem Rohbauflansch 7, insbesondere Außenblech 8, erstreckt und den dazwischen vorliegenden Spalt 15 dichtend verschließt. Das Dichtungsprofil 14 ist an der Innenseite 13 der Fahrzeugscheibe 12 befestigt, vorzugsweise daran angespritzt bzw. anextrudiert oder angeklebt. Es umfasst einen Grundkörper 16, der mit der Innenseite 13 verbunden ist. Vom Grundkörper 16, der beispielsweise im Querschnitt U-förmig mit einer Basis 17 und zwei Schenkeln 18 und 19 ausgeführt sein kann, geht einstückig eine freistehende, elastische Dichtlippe 20 aus, die insbesondere mit dem Schenkel 19 verbunden ist. Die Dichtungslippe 20 weist - im Querschnitt gesehen - eine Dicke D bis zu ihrem vom Schenkel 19 abgewandten Ende 21 auf. An das Ende 21 schließt sich einstückig ein gegenüber der Dichtlippe 20 verdickt ausgeführter Dichtungsabschnitt 22 an, der mit einer am Rohbauflansch 7, insbesondere am Außenblech 8, ausgebildeten Dichtfläche 23 zusammenwirkt und daran anliegt. Der Dichtungsabschnitt 22 ist - im Querschnitt gesehen - zumindest abschnittweise kreisförmig ausgeführt; ausgenommen von dem kreisförmigen Querschnitt ist ein Verbindungsbereich 24 zwischen dem Ende 21 und dem Dichtungsabschnitt 22. Mit seiner Umfangsfläche 25 liegt der Dichtungsabschnitt 22 somit linienförmig auf der Dichtungsfläche 23 auf, und zwar unabhängig davon, unter welchem Winkel die Dichtungslippe 20 bezüglich der Dichtfläche 23 verläuft. Somit ist die zwischen der Dichtfläche 23 und der Umfangsfläche 25 vorliegende Auflagefläche in jeder Stellung der Dichtungslippe 20 als Linienberührung 26 zu sehen. Somit wird klar, dass der Abstand zwischen Fahrzeugscheibe 12 und Rohbauftansch 7 im Bereich des Spaltes 15 variieren kann, ohne dass die Dichtwirkung des Dichtungsabschnitts 22 wesentlich beeinflusst wird. Die Dichtwirkung ist somit toleranzunempfindlich und ermöglicht überdies eine einstellbare Anordnung der Fahrzeugscheibenanordnung 6 bezüglich des Karosserieausschnitts 5 bzw. Rohbauflansch 7. Diese Einstellbarkeit kann in X- und/oder Y- und/oder Z-Richtung ausgeführt sein.

Der Durchmesser A des als Vollprofil ausgeführten Dichtungsabschnitts 22 ist größer als die Dicke D der Dichtungslippe 20. Dadurch, dass der Dichtungsabschnitt 22 als Vollprofil ausgeführt ist, bleibt der kreisförmige Querschnitt im wesentlichen auch beim Wirken einer Anlagekraft des Dichtungsabschnitts 22 an der Dichtungsfläche 23 im wesentlichen unverändert, so dass die vorstehend erwähnte Linienberührung zwischen Dichtungsabschnitt 22 und Dichtfläche 23 erhalten bleibt.

Der Grundkörper 16 des Dichtungsprofils 14 ist zumindest abschnittsweise als Vollprofil ausgeführt; im gezeigten Ausführungsbeispiel ist der Grundkörper vollständig durch ein Vollprofil gebildet. Es genügt jedoch grundsätzlich, wenn zumindest der die Dichtungslippe 20 tragende Abschnitt, hier der Schenkel 19, des Grundkörpers 16 als Vollprofil ausgeführt ist. Die Dichtwirkung des Dichtungsprofils 14 gegenüber der Dichtfläche 23 wird durch diese Ausführung des Grundkörpers 16 im wesentlichen durch die Dichtungslippe 20 bzw. den verdickten Dichtungsabschnitt 22 bestimmt, da der Grundkörper 16 kaum verformbar ist und dadurch nicht wegknicken kann, wenn der Dichtungsabschnitt 22 und dadurch die Dichtungslippe 22 mit einer Kraft beaufschlagt werden, was beim Anlegen des Dichtungsabschnitts 22 an die Dichtfläche 23 erfolgt. Der Grundkörper 16 bzw. der Schenkel 19 wirkt also als Stütz- bzw. Widerlager für die Dichtungslippe 20 und deren Dichtungsabschnitt 22.

In Fig. 2 ist noch zu sehen, dass die Dichtungslippe 20 eine Verlängerung des Grundkörpers 16 bzw. des Schenkels 19 darstellt, der sich - ausgehend von der Innenseite 13 - etwa gerade in Richtung Dichtfläche 23 erstreckt. Die Dicke D der Dichtungslippe 20 ist vorzugsweise geringer als die Dicke des Grundkörpers 16, insbesondere des Schenkels 19.

## Patentansprüche

1. Dichtungsprofil für eine Fahrzeugscheibe, mit einem Grundkörper und mit einer von dem Grundkörper ausgehenden freistehenden Dichtungslippe mit einer - im Querschnitt gesehen - Dicke, wobei die Dichtungslippe an ihrem Ende einen verdickten Dichtungsabschnitt trägt, der - im Querschnitt gesehen - zumindest abschnittweise, d.h. mit Ausnahme von seinem Verbindungsbereich mit der Dichtungslippe im wesentlichen kreisförmig ist, und der einen Durchmesser aufweist, der größer als die Dicke der Dichtungslippe ist, **dadurch gekennzeichnet, dass** der Dichtungsabschnitt (22) im Querschnitt als Vollprofil ausgeführt ist.

2. Dichtungsprofil nach Anspruch 1, **dadurch gekennzeichnet, dass** der Dichtungsabschnitt (22) und die Dichtungslippe (20) einstückig ausgeführt sind.

3. Dichtungsprofil nach Anspruch 1, **dadurch gekennzeichnet, dass** zumindest ein die Dichtungslippe (20) tragender Abschnitt (Schenkel 19) des Grundkörpers (16) als Vollprofil ausgeführt ist.

4. Fahrzeugscheibenanordnung mit einer Fahrzeugscheibe und einem Dichtungsprofil zumindest nach Anspruch 1.

5. Fahrzeugscheibenanordnung nach Anspruch 4, **dadurch gekennzeichnet, dass** der Grundkörper (16) des Dichtungsprofils (14) an der Fahrzeugscheibe (12) angeordnet ist und die Dichtungslippe (20) mit ihrem Dichtungsabschnitt (22) an einen Karosserieausschnitt (5) eines Kraftfahrzeugs (1) anlegbar ist.

6. Fahrzeugscheibenanordnung nach Anspruch 4 oder 5, **dadurch gekennzeichnet, dass** das Dichtungsprofil (14) an die Fahrzeugscheibe (12) angespritzt ist.

7. Fahrzeugscheibenanordnung nach Anspruch 4, **dadurch gekennzeichnet, dass** sie als feststehende Fahrzeugscheibenanordnung (6) ausgeführt ist.

8. Fahrzeugscheibenanordnung nach Anspruch 7, **dadurch gekennzeichnet, dass** die feststehende Fahrzeugscheibenanordnung (6) bezüglich des Karosserieausschnitts (5) einstellbar ist.
